# EUROPÄISCHE PATENTANMELDUNG

(11) **EP 1 961 952 A1**
(43) Veröffentlichungstag der Anmeldung: **27.08.2008**
(21) Anmeldenummer: 08100486.3
(22) Anmeldetag: 15.01.2008
(51) Int. Cl.: F02M 51/06, F02M 57/00, F02M 63/02, F02M 65/00, F02D 41/40

(54) **Injektor mit Sensormodul sowie Einspritzsystem**

(30) Priorität: 22.02.2007 DE 102007008617
(71) Anmelder: ROBERT BOSCH GMBH, 70442 Stuttgart (DE)
(72) Erfinder: Pietsch, Ingo, 76131 Karlsruhe (DE); Rohde, Hartmut, 87448 Waltenhofen (DE); Schauer, Karl-Heinz, 71665 Vaihingen (DE); Schmidt, Timo, 71154 Nufringen (DE); Miessner, Ralf, 71634 Ludwigsburg (DE); Mader, Bernhard, 71394 Kernen (DE)

(57) **Zusammenfassung**

Die Erfindung betrifft einen Injektor (11) zum Einspritzen von Kraftstoff in Brennräume von Brennkraftmaschinen, insbesondere Common-Rail-Injektor. Erfindungsgemäß ist vorgesehen, dass dem Injektor (11) mindestens ein Sensormodul (1) mit mindestens einem Sensor zur Messung mindestens eines Betriebsparameters zugeordnet ist.

## Beschreibung

### Stand der Technik

Die Erfindung betrifft einen Injektor gemäß dem Oberbegriff des Anspruchs 1 sowie ein Einspritzsystem gemäß Anspruch 10.

In der Praxis zum Einsatz kommende Injektoren mit elektromagnetischen oder piezoelektrischen Aktuatoren weisen aufgrund von unvermeidbaren Fertigungstoleranzen unterschiedliche Charakteristika auf. Diese wirken sich auf das Einspritzverhalten des Injektors aus und werden in der Praxis durch softwareseitige Maßnahmen (z.B. Injektormengenabgleich-IMA) in einem Steuergerät des Einspritzsystems weitgehend normalisiert. Die Kompensationsgrößen müssen hierzu beim Einbau der Injektoren in das Fahrzeug durch ein Kennfeld im Speicher des Steuergerätes, insbesondere des Motorsteuergerätes des Einspritzsystems abgelegt werden. Die hierzu erforderlichen Daten (injektorspezifische Parameter) werden dabei in einem Barcode auf dem jeweiligen Injektor abgelegt. Beim Einbau der Injektoren in das Kraftfahrzeug und beim Einlesen der Barcodes in das Steuergerät kann es dabei zu Zuordnungsfehlern kommen, so dass es in der Folge zu Fehlsteuerungen der Injektoren im Betrieb kommen kann.

Einspritzmengenschwankungen durch Druckwellen in hydraulischen Leitungen und Speichern des Einspritzsystems sind kraftstofftemperaturabhängig, da die Dichte des Kraftstoffs in Abhängigkeit der Kraftstofftemperatur schwankt. Zur Korrektur der Einspritzmengenschwankungen werden daher vom Steuergerät Kraftstofftemperaturinformationen verarbeitet. Hierzu wird die Temperatur an mehreren Stellen im Einspritzsystem, beispielsweise in Fließrichtung vor einem Kraftstoff-Hochdruckspeicher (Rail), mit Abstand zu den Injektoren gemessen und die Kraftstofftemperatur im Injektor durch die Kombination der gemessenen Systemtemperaturen, angenähert. Insbesondere bei dynamischen Fahrzuständen treten dabei erhebliche Abweichungen zwischen der angenäherten Injektortemperatur und der tatsächlichen Injektortemperatur auf, was zu Fehlern bei der Korrektur von Einspritzmengenschwankungen führt. Zusätzlich verändern sich die Durchflussmengen durch Verschleißerscheinungen während des Lebenszyklus eines Injektors, was zusätzlich kompensiert werden muss.

Die Problematik der Einspritzmengenschwenkung verschärft sich bei bekannten Einspritzsystem dadurch, dass die eingespritzte Kraftstoffmenge im Stand der Technik rein gesteuert appliziert wird. Die Sollgrößen werden dabei über eine Vielzahl von Adaptionsfunktionen an sich ändernde Systembedingungen angepasst. Bei bekannten Steuerungen wird bei der Verwendung der Adaptionsfunktionen von einem idealen Verhalten des Injektors, das frei von Alterungs-, Fertigungs- und Umgebungseinflüssen ist, ausgegangen. Diese arbeiten langsam, so dass Änderungen des Einspritzverhaltens erst mit zeitlicher Verzögerung kompensiert werden können. Dabei werden ausschließlich die gemittelten Auswirkungen aller Injektoren kompensiert. Abweichungen einzelner Injektoren können nicht injektorspezifisch korrigiert werden. Da diese Effekte in der Realität jedoch auftreten, ergibt sich ein von Einspritzung zu Einspritzung und über die Lebensdauer des Injektors variierendes Verhalten des Injektors, das nicht oder nur indirekt kompensiert werden kann. Hierdurch kann das Potential der Mehrfacheinspritzung bezüglich einer Verbrauchs- und Emissionsreduktion nicht vollständig ausgenutzt werden.

### Offenbarung der Erfindung

### Technische Aufgabe

Der Erfindung liegt daher die Aufgabe zugrunde, einen Injektor vorzuschlagen, mit dem die Einspritzmengengenauigkeit erhöhbar ist. Ferner besteht die Aufgabe in der Bereitstellung eines entsprechenden Einspritzsystems.

### Technische Lösung

Hinsichtlich des Injektors wird die Aufgabe mit den Merkmalen des Anspruchs 1 gelöst. Das die Aufgabe lösende Einspritzsystem ist in Anspruch 10 angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, mindestens ein Sensormodul vorzusehen und dieses unmittelbar aus oder in nächster Nähe zum Injektor anzuordnen, mit dem mindestens ein Betriebsparameter eines Einspritzvorgangs unmittelbar aus dem bzw. im Bereich des Injektors detektierbar ist, so dass eine Annäherung des entsprechenden Betriebsparameters auf Basis von mit (großem) Abstand zu dem Injektor detektierten Messergebnissen bzw. Systemparametern entfallen bzw. ergänzt werden kann, wodurch wiederum die Einspritzmengengenauigkeit des Injektors durch Verarbeitung des mindestens einen detektierten Betriebsparameters mittels eines Steuergerätes optimiert werden kann.

Mit Vorteil ist das mindestens eine Sensormodul unmittelbar mechanisch mit dem Injektor, insbesondere dem Injektorkörper oder einem Düsenkörper des Injektors oder mit einem Injektorstecker zur Spannungsversorgung des elektromagnetischen oder piezoelektrischen Aktuators verbunden, so dass der mindestens eine zu messende Betriebsparameter in unmittelbarer Nähe zum eigentlichen Einspritzvorgang gemessen werden kann. Bevorzugt ist das Sensormodul, welches eine Vielzahl von unterschiedlichen und/oder gleichen Sensoren enthalten kann, im Bereich des Injektorkopfes angeordnet und bevorzugt definiert in Bezug auf eine Längsachse oder Querachse des Injektors angeordnet. Eine Anordnung parallel oder quer zur Längsachse des Injektors hat sich dabei als vorteilhaft erwiesen. Von besonderem Vorteil ist es, wenn der mindestens eine Sensor des Sensormoduls nicht unmittelbaren Kontakt zu dem unter Hochdruck stehenden Kraftstoff (Injektorzulauf und/oder Druckraum des Injektors) hat, sondern dass die Messung durch den Injektorkörper und/oder den Düsenkörper und/oder den Injektorstecker hindurch erfolgt. Hierdurch können Hochdruckdichtigkeitsprobleme sowie Hochdruckfestigkeitsprobleme der Injektorkonstruktion vermieden werden. Etwaige (geringe) Verzögerungen bei der Detektierung der sich zeitlich ändernden Betriebsparameter können hierbei ohne (wesentliche) Nachteile in Kauf genommen bzw. kompensiert werden.

Um von einer reinen Einspritzmengensteuerung zu einer Art indirekter Einspritzmengenregelung zu gelangen, für die eine möglichst exakte Bestimmung der Ist-Einspritzmenge benötigt wird, ist in Ausgestaltung der Erfindung mit Vorteil vorgesehen, dass das Sensormodul mindestens einen Sensor zur Detektierung der Öffnungsbewegung und/oder der Schließbewegung einer Düsennadel des Injektors, insbesondere mindestens einen Sensor zur Detektierung des Schließ- und/oder des Öffnungszeitpunktes der Düsennadel vorgesehen ist. In zusätzlicher Kenntnis des Kraftstoffdruckes der über einen Drucksensor am Injektor oder im Kraftstoff-Hochdruckspeicher gemessen werden kann, kann durch die Bestimmung dieses Betriebsparameters (Öffnungs- oder Schließzeitpunkt des Injektoraktors und/oder der Injektornadel) die tatsächliche Einspritzmenge vergleichsweise exakt bestimmt werden. Ein derart ausgestaltetes Sensormodul bietet die Möglichkeit, die Einspritzdauer, beispielsweise mit Hilfe des Steuergerätes zu regeln oder zu adaptieren.

Bevorzugt wird die Öffnungs- und/oder Schließbewegung der Düsennadel durch die Erfassung von Schwingungen detektiert, die durch die Öffnungsbewegung und/oder Schließbewegung der Düsennadel verursacht werden. Es ist auch denkbar, über von einer Aktuatorbewegung verursachten Schwingungen auf die Öffnungsbewegung und/oder die Schließbewegung, insbesondere auf den Schließ- und/oder Öffnungszeitpunkt der Düsennadel zu schließen bzw. diesen abzuschätzen. Desweiteren ist durch einen solchen Sensor die Erfassung von Schwingungen, ausgelöst durch die Kraftstoffverbrennung in dem Zylinder, in dem das Messsystem angeordnet ist oder einen Nachbarzylinder, vorteilhaft möglich.

In Weiterbildung der Erfindung ist mit Vorteil vorgesehen, dass der mindestens ein Sensor zur Detektierung der Öffnungsbewegung und/oder der Schließbewegung der Düsennadel als piezoelektrischer oder mikromechanischer Beschleunigungssensor realisiert ist.

Alternativ oder bevorzugt zusätzlich zu einem Sensor zur Detektierung der Öffnungsbewegung und/oder der Schließbewegung der Düsennadel umfasst das Sensormodul mit Vorteil mindestens einen Sensor zur Detektierung der Kraftstofftemperatur. Aus konstruktiven Überlegungen heraus ist es von Vorteil, wenn die Kraftstofftemperatur im Bereich des Hochdruckanschlusses des Injektors gemessen wird.

Zusätzlich oder alternativ kann auch die Kraftstofftemperatur in einer Druckkammer des Injektors oder im Bereich der Düsenlochanordnung des Injektors detektiert werden. Die somit ermittelte Kraftstofftemperatur ist unmittelbar proportional zur Kraftstofftemperatur in unmittelbarer Nähe der Einspritzung, wodurch, bevorzugt mittels des Steuergerätes des Einspritzsystems, Druckwellenschwankungen genauer als bisher injektorselektiv korrigiert werden können.

Von besonderem Vorteil ist es, wenn das Sensormodul eine Vielzahl von Sensoren umfasst, mittels denen Betriebsparameter richtungssensitiv erfasst und ausgewertet werden können. Dabei können auch mehrere Sensoren für die gleichzeitig Messung von Betriebsparametern in mehreren Richtungen auf dem Sensormodul angeordnet sein. Zur signaltechnischen Bearbeitung der detektierten Messwerte ist es von Vorteil, wenn das Sensormodul mindestens einen Mikroprozessor zur Aufbereitung der Messwerte aufweist. Von besonderem Vorteil ist es, wenn das Sensormodul einen Datenspeicher umfasst, indem bevorzugt injektorspezifische Parameter und/oder Kompensationsgrößen, beispielsweise für einen Injektormengen-abgleich mittels des Steuergerätes abgelegt sind. Auf die Anbringung eines Barcodes am Injektor, der diese Informationen erhält, kann so mit Vorteil verzichtet werden. Aufgrund der elektronischen Ablage der injektorspezifischen Daten kann eine falsche Zuordnung des Injektors beim Einbau vermieden werden.

Von wesentlichem Vorteil ist es weiterhin, wenn das mindestens eine Sensormodul zusätzlich oder alternativ mindestens eine Kommunikationsstelle umfasst, mittels der das Sensormodul mit einem Steuergerät des Einspritzsystems kommunizieren kann. Bevorzugt ist die Kommunikationsschnittstelle an elektrischen Zuleitungen des Injektors im Bereich des Injektorkopfes bzw. des Injektorsteckers signalleitend angebunden (Powerline-Kommunikation). Zusätzlich oder alternativ können eigene Signalleitungen vorgesehen werden. Auch ist eine Funkübertragung der Messdaten zu einem Steuergerät denkbar. Die Kontaktierung des Sensormoduls an den Injektorstecker kann beispielsweise durch eine Einpresstechnik, durch Selektivlöten oder durch ein Schweißverfahren realisiert werden. Bevorzugt erfolgt erst nach der elektrischen bzw. signalleitenden Kontaktierung des Sensormoduls die endgültige Formgebung des Injektorkopfes mit Stecker und Sensormodul, beispielsweise durch Thermoplastspritzgießen. Hierdurch wird das Sensormodul gleichzeitig mechanisch mit dem Injektor verbunden.

Von Vorteil ist eine Ausführungsform, bei der die elektronischen Bauelemente des Sensormoduls auf einen als keramische oder organische Leiterplatte oder als flexible Leiterplatte ausgebildeten Schaltungsträger anzuordnen sind. Ebenso ist es denkbar den Schaltungsträger als spritzgegossener Schaltungsträger (molded interconnected device - MLD) auszubilden, was insbesondere Vorteile in der Designfreiheit mit sich bringt. Bevorzugt können die Leiterbahnen direkt auf einem Gehäuse (dreidimensional) angeordnet werden.

In Ausgestaltung der Erfindung ist mit Vorteil vorgesehen, dass das Sensormodul in einem Schutzgehäuse verkapselt ist. Das Schutzgehäuse dient zum Zweck der besseren Handhabung im Fertigungsprozess sowie zur Steigerung der Robustheit gegenüber den Umgebungsbedingungen beim Motoranbau. Das Schutzgehäuse kann als Hohlgehäuse oder als massive Umhüllung ausgeführt werden. Es ist denkbar, das Schutzgehäuse zweiteilig auszuführen, wobei der Schaltungsträger mit einem geeigneten Verfahren, beispielsweise Kleben, Schrauben oder einer Rastverbindung fixiert wird. Der Schaltungsträger selbst kann dabei mit Vorteil bereits als eine Gehäusehälfte dienen. Eine massive als Schutzgehäuse dienende Umhüllung kann beispielsweise mit Schmelzklebstoffen (Hotmeltmolding) oder Expoxid-Niederdruckpressmassen (Transfermolding) oder Vergießen hergestellt werden. Bei einer massiven Umhüllung werden die elektronischen Bauelemente zumindest teilweise, vorzugsweise vollständig in die Umhüllung eingebettet.

Ferner umfasst die Erfindung ein Einspritzsystem mit mindestens einem zuvor beschriebenen Sensormodul. Wesentlich ist dabei, dass das Sensormodul, insbesondere über eine Kommunikationsschnittstelle mit einem Steuergerät, insbesondere mit einem Motorsteuergerät kommuniziert, wobei das Steuergerät (u.a.) auf Basis der mittels des Sensormoduls gewonnenen Informationen den Injektor ansteuert.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
Fig. 1: eine mögliche Ausführungsform eines Sensormoduls für einen Common-Rail-Injektor,
Fig. 2: eine alternative Ausführungsform eines Sensormoduls,
Fig. 3: eine mögliche Ausführungsform eines Sensormoduls mit einem hohlen Schutzgehäuse,
Fig.4: ein Sensormodul, bei dem das Schutzgehäuse als massive Umhüllung ausgebildet ist,
Fig. 5: eine mögliche Einbausituation des in Fig. 2 gezeigten Sensormoduls bei einem Common-Rail-Injektor und
Fig. 6: eine mögliche Einbausituation des in Fig. 1 gezeigten Sensormoduls bei einem Common-Rail-Inj ektor.

### Ausführungsformen der Erfindung

In den Figuren sind gleiche Bauteile und Bauteile mit der gleichen Funktion mit den gleichen Bezugszeichen gekennzeichnet.

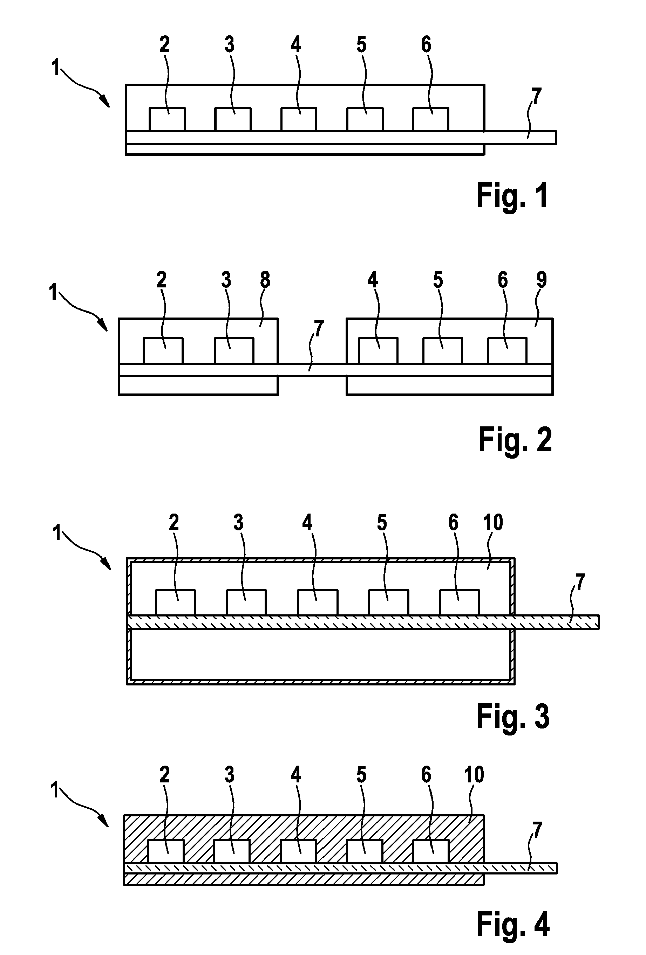

In Fig. 1 ist ein Sensormodul 1 zur Festlegung an einem Injektor zum Einspritzen von Kraftstoff in Brennräume von Brennkraftmaschinen gezeigt. Das Sensormodul 1 umfasst einen als piezoelektrischer Beschleunigungssensor ausgebildeten Schwingungssensor 2 zur Detektierung des Schließzeitpunktes einer Düsennadel des Injektors. Ferner ist ein Mikroprozessor 3 zur Aufbereitung der Messdaten vorgesehen. Zusätzlich umfasst das Sensormodul 1 einen Temperatursensor 4, mit dem die Kraftstofftemperatur im Injektor oder in einer Injektorzuleitung in unmittelbarer Nähe zum Injektor messbar ist. Weiterhin ist ein Datenspeicher 5 vorgesehen, in dem injektorspezifische Kompensationsgrößen abgelegt sind und von einem Steuergerät abgefragt werden können.

Die elektronischen Bauelemente 2, 3, 4, 5, 6 des Sensormoduls 1 sind auf einem in diesem Ausführungsbeispiel als keramische Leiterplatte ausgebildeten Schaltungsträger 7 angeordnet.

Bei dem Ausführungsbeispiel gemäß Fig. 2 umfasst das Sensormodul zwei Funktionseinheiten 8, 9, die über den Schaltungsträger 7 signalleitend miteinander verbunden sind. Die erste Funktionseinheit 8 beinhaltet dabei den Schwingungssensor 2 und den ihm zugeordneten Signalprozessor 3 zur Aufbereitung der detektierten Messwerte. Die aufbereiteten Messwerte werden über nicht dargestellte Leitungen auf dem Schaltungsträger 7 der Kommunikationsschnittstelle 6 zugeführt, welche wiederum signalleitend mit einem Steuergerät verbunden ist.

Das in Fig. 3 dargestellte Sensormodul 1 umfasst ein als Hohlgehäuse ausgebildetes Schutzgehäuse 10, in dem der Schaltungsträger 7 mit den Elektronikbauteilen auf geeignete Weise fixiert ist.

Bei dem in Fig. 4 dargestellten Schutzgehäuse 10 handelt es sich um eine massive Umhüllung, die die elektronischen Bauelemente 2, 3, 4, 5, 6 des Sensormoduls 1 einbettet. Der Schaltungsträger 7 ragt seitlich aus dem Schutzgehäuse 10 zur Kontaktierung von mindestens zwei separaten Signalleitungen oder zur Kontaktierung von elektrischen Zuleitungen des Injektors (Powerline-Kommunikation) oder gegebenenfalls zur Kontaktierung eines Senders zur Übermittlung der Messdaten per Funk, heraus.

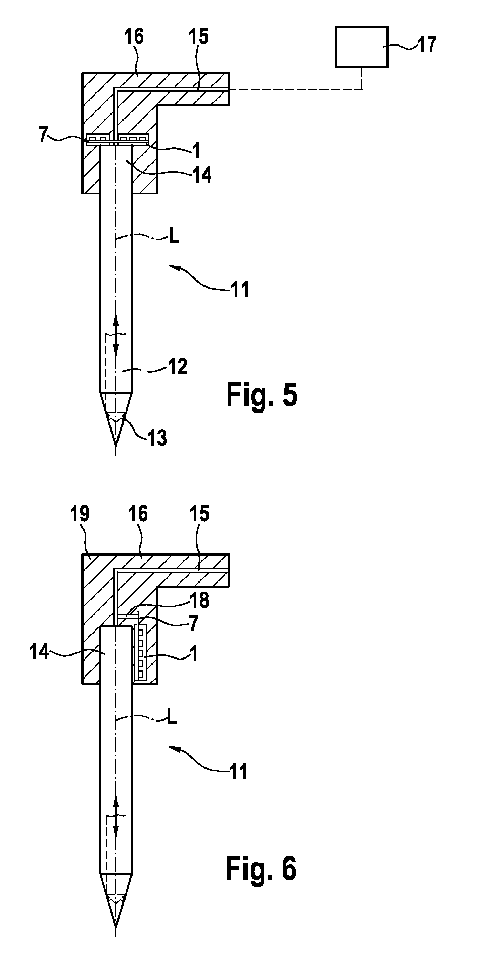

In Fig. 5 ist ein als Common-Rail-Injektor ausgebildeter Injektor 11 mit einer Düsennadel 12 gezeigt, die von einem nicht dargestellten Aktuator zwischen einer Schließstellung und einer den Kraftstofffluss durch eine Düsenlochanordnung 13 freigebenden Öffnungsposition in axialer Richtung verstellbar ist.

Der in der Zeichnungsebene obere Bereich des Injektors 11 wird als Injektorkopf 14 bezeichnet, in den mindestens eine elektrische Versorgungsleitung 15 zur Versorgung des Aktuators mündet. Gegebenenfalls sind zusätzlich mindestens zwei Signalleitungen zur Kontaktierung des Sensormoduls 1 vorgesehen. Das Sensormodul 1 ist quer zur Längsachse L des Injektors 11 auf der Stirnseite des Injektorkopfes 14 angeordnet, wobei der Schaltungsträger 7 des Sensormoduls 1 signalleitend mit den elektrischen Versorgungsleitungen 15 oder gegebenenfalls separaten Signalleitungen verbunden ist, die zu einem schematisch dargestellten Steuergerät 17 geführt sind. Dabei ist das Sensormodul 1 vollständig von dem Stecker 16 bzw. in diesem eingegossen umgeben.

Bei dem Ausführungsbeispiel gemäß Fig. 6 ist das Sensormodul parallel zur Längsachse L des Injektors 11 angeordnet und befindet sich in etwa seitlich vom Injektorkopf 14, der über den Stecker 16 an eine elektrische Versorgungsleitung 15 für den Aktuator angeschlossen ist. An diese elektrische Versorgungsleitung 15 ist der Schaltungsträger 7 des Sensormoduls 1 über eine Querleitung 18 signalleitend angebunden. Das Steckergehäuse 19 des Steckers 16 wurde nach der Kontaktierung der elektrischen Versorgungsleitung 15 durch den Schaltungsträger 7 durch Umspritzen des Injektorkopfes 14 mitsamt dem Sensormodul 1 hergestellt.

## Patentansprüche

1. Injektor zum Einspritzen von Kraftstoff in einem Brennraum einer Brennkraftmaschine, insbesondere Common-Rail-Injektor,
**dadurch gekennzeichnet,**
**dass** dem Injektor (11) mindestens ein Sensormodul (1) mit mindestens einem Sensor (2, 4) zur Messung mindestens eines Betriebsparameters zugeordnet ist.

2. Injektor nach Anspruch 1,
**dadurch gekennzeichnet,**
**dass** das Sensormodul (1) mechanisch mit dem Injektor (11) oder einem Injektorstecker (16) verbunden und/oder im Bereich eines Injektorkopfes (14) angeordnet ist.

3. Injektor nach einem der vorhergehenden Ansprüche,
**dadurch gekennzeichnet,**
**dass** das Sensormodul (1) mindestens einen Sensor (2) zur Detektierung der Öffnungsbewegung und/oder der Schließbewegung einer Düsennadel (12) und/oder eines Injektoraktors, insbesondere zur Detektierung des Schließ- und/oder des Öffnungszeitpunktes der Düsennadel (12) und/oder des Injektoraktors aufweist.

4. Injektor nach Anspruch 3,
**dadurch gekennzeichnet,**
**dass** der Sensor (2) zur Detektierung der Öffnungsbewegung und/oder der Schließbewegung der Düsennadel (12) und/oder des Injektoraktors als Sensor (2) zur Detektierung von durch die Düsennadelbewegung und/oder die Aktorbewegung verursachten Schwingungen ausgebildet ist.

5. Injektor nach einem der Ansprüche 3 oder 4,
**dadurch gekennzeichnet,**
**dass** der Sensor (2) zur Detektierung der Öffnungsbewegung und/oder der Schließbewegung der Düsennadel (12) und/oder des Injektoraktors als piezoelektrischer oder mikromechanischer Beschleunigungssensor ausgebildet ist.

6. Injektor nach einem der vorhergehenden Ansprüche,
**dadurch gekennzeichnet,**
**dass** das Sensormodul (1) mindestens einen Sensor (4) zur Detektierung der Kraftstofftemperatur, insbesondere der Kraftstoffzulauftemperatur im Bereich des Injektorkopfes (14) und/oder der Kraftstofftemperatur in einer Druckkammer des Injektors (11), vorzugsweise im Bereich einer Düsenlochanordnung (13) aufweist.

7. Injektor nach einem der vorhergehenden Ansprüche,
**dadurch gekennzeichnet,**
**dass** das Sensormodul (1) mindestens einen Mikroprozessor (3) und/oder mindestens einen Datenspeicher (5), vorzugsweise zur Speicherung injektorspezifischer Parameter und/oder mindestens eine Kommunikationsschnittstelle (6) umfasst.

8. Injektor nach einem der vorhergehenden Ansprüche,
**dadurch gekennzeichnet,**
**dass** das Sensormodul (1) einen als keramische, organische und/oder flexible Leiterplatte oder als spritzgegossenen Schaltungsträger ausgebildeten Schaltungsträger (7) umfasst.

9. Injektor nach einem der vorhergehenden Ansprüche,
**dadurch gekennzeichnet**,
das Sensormodul (1) insbesondere durch Molden, Hotmelt oder Verguss, verkapselt ist.

10. Einspritzsystem mit mindestens einem Injektor mit den Merkmalen eines der vorhergehenden Ansprüche, bei dem das Sensormodul (1) signalleitend mit einem Steuergerät (17), insbesondere einem Motorsteuergerät verbunden ist.
